# FASCICULE DE BREVET EUROPEEN

(11) **EP 2 836 895 B1**
(45) Date de publication et mention de la délivrance du brevet: **01.06.2016**
(21) Numéro de dépôt: 13720467.3
(22) Date de dépôt: 10.04.2013
(51) Int. Cl.: G06F 3/042

(54) **DISPOSITIF D'INTERFACE UTILISATEUR A ELECTRODES TRANSPARENTES**
BENUTZERSCHNITTSTELLENVORRICHTUNG MIT TRANSPARENTEN ELEKTRODEN
USER INTERFACE DEVICE HAVING TRANSPARENT ELECTRODES

(30) Priorité: 11.04.2012 FR 1253329
(43) Date de publication de la demande: 18.02.2015
(73) Titulaire: Commissariat à l'Énergie Atomique et aux Énergies Alternatives, 75015 Paris (FR); ISORG, 38000 Grenoble (FR)
(72) Inventeur: TALLAL, Jamal, F-38100 Grenoble (FR); BENWADIH, Mohammed, F-94500 Champigny-sur-Marne (FR)
(74) Mandataire: Thibon, Laurent
(86) Numéro de dépôt international: PCT/FR2013/050777
(87) Numéro de publication internationale: WO 2013/153327

(56) Documents cités:
- US-A1- 2011 043 486

## Description

### Domaine de l'invention

La présente invention concerne un dispositif d'interface utilisateur, ou interface homme-machine, à électrodes transparentes.

### Exposé de l'art antérieur

Il existe plusieurs exemples de dispositifs d'interface utilisateur, ou interface homme-machine, à électrodes transparentes. Par exemple, certains écrans d'affichage, notamment des écrans à cristaux liquides et des écrans plasma, comprennent des électrodes transparentes. C'est également le cas de certains écrans tactiles qui comprennent une surface tactile, c'est-à-dire un dispositif d'interface utilisateur contrôlable par simple glissement du doigt ou de la main sur une surface sensible au toucher, superposée à un écran d'affichage.

Un autre exemple concerne un dispositif d'interface utilisateur sans contact tel que décrit dans la demande de brevet français FR1158607.

Un dispositif d'interface utilisateur à électrodes transparentes comprend, de façon générale, une matrice de pixels. Par pixel, on entend un élément photoactif, c'est-à-dire un élément pouvant notamment émettre de la lumière, modifier la lumière qui le traverse et/ou détecter la lumière qu'il reçoit. A titre d'exemple, le pixel peut être un capteur de photons. La sélection d'un pixel est réalisée par deux électrodes qui prennent le pixel en sandwich. Les photons doivent pouvoir se propager librement entre un utilisateur et les pixels. Dans ce but, les électrodes connectées aux pixels situées entre les pixels et l'utilisateur sont constituées d'un matériau transparent. Les électrodes transparentes ont, par exemple, la forme de bandes connectées à plusieurs pixels ou d'un film unique connecté à l'ensemble des pixels de la matrice. Les électrodes transparentes sont généralement recouvertes d'un revêtement isolant et transparent, par exemple du plastique ou du verre.

Les matériaux utilisés pour réaliser des électrodes transparentes qui donnent le plus de satisfaction pour les propriétés de conductivité électrique et de transparence sont les oxydes conducteurs et transparents ou TCO (acronyme anglais pour Transparent Conductive Oxide), par exemple l'oxyde d'indium dopé à l'étain ou ITO (acronyme anglais pour Indium Tin Oxide). Pour obtenir une conduction électrique satisfaisante des électrodes transparentes, l'épaisseur des couches du matériau TCO utilisées doit être supérieure à 50 nm. Toutefois, les couches de matériau TCO ainsi formées sont fragiles. En effet, on peut observer la formation de fissures dans les électrodes lorsqu'elles sont soumises à des contraintes trop importantes. Cela peut être le cas lors de la fabrication du dispositif d'interface utilisateur qui peut notamment comprendre des étapes de recuit thermique, source d'apparition de contraintes dans les couches de matériau TCO. Cela peut être également le cas lorsqu'on souhaite déformer en fonctionnement le dispositif d'interface utilisateur, par exemple lorsqu'on souhaite appliquer le dispositif d'interface utilisateur sur une surface qui n'est pas plane.

Des tentatives ont été réalisées pour remplacer le matériau TCO par un matériau plus souple. Une possibilité correspond à l'utilisation d'un polymère conducteur. Toutefois, les propriétés de conductivité électrique des polymères conducteurs actuellement disponibles sont généralement moins bonnes que celles des matériaux TCO. Une autre possibilité correspond à l'utilisation de métaux pour réaliser les électrodes. Toutefois, il est alors nécessaire de déposer des couches métalliques très fines, par exemple inférieures à 10 nm pour l'or, pour obtenir des électrodes transparentes. Les procédés de dépôt sont alors complexes. Une autre possibilité consiste à remplacer les électrodes transparentes par des fils métalliques de dimensions nanométriques ou à réaliser les électrodes transparentes avec des nanotubes de carbone. Toutefois, les procédés de fabrication de telles électrodes sont complexes et/ou ne peuvent pour l'instant pas être mis en oeuvre à coûts réduits.

De façon plus générale, les problèmes décrits précédemment pour les couches de matériau TCO peuvent également se rencontrer dès que les pixels comprennent au moins une couche d'un matériau fragile.

Il existe donc un besoin d'un dispositif d'interface utilisateur comprenant des couches d'un matériau fragile, notamment un dispositif d'interface utilisateur comprenant des électrodes transparentes réalisées à base de TCO, qui ne fissurent pas lors de la fabrication du dispositif d'interface utilisateur ou lorsque le dispositif d'interface utilisateur est déformé en fonctionnement.

### Résumé

Ainsi, un objet de la présente invention est de prévoir un dispositif d'interface utilisateur palliant au moins en partie certains des inconvénients des dispositifs existants.

Un autre objet de la présente invention est de prévoir un dispositif d'interface utilisateur comprenant au moins une couche d'un matériau fragile, notamment un dispositif d'interface utilisateur à électrodes transparentes en matériau TCO.

Un autre objet de la présente invention est de prévoir un dispositif d'interface utilisateur susceptible d'être déformé en fonctionnement.

Un autre objet d'un exemple de réalisation de la présente invention est de prévoir un dispositif d'interface susceptible d'être actionné sans contact avec l'utilisateur.

Un autre objet d'un exemple de réalisation de la présente invention est de prévoir un dispositif d'interface utilisateur sans contact, susceptible de fonctionner sans émettre de rayonnement.

La présente invention propose un dispositif d'interface comprenant une matrice de pixels et un substrat isolant et transparent, les pixels étant reliés au substrat par des éléments de liaison, la surface de contact entre les éléments de liaison et les pixels étant strictement inférieure à la surface des pixels en regard du substrat.

Selon un exemple de réalisation de l'invention, la surface de contact entre les éléments de liaison et les pixels est inférieure à la moitié de la surface des électrodes en regard du substrat.

Selon un exemple de réalisation de l'invention, les éléments de liaison sont en un matériau plus souple que les matériaux constituant les pixels.

Selon un exemple de réalisation de l'invention, les éléments de liaison sont en un matériau souple ayant un allongement à la rupture supérieur ou égal à 10 %.

Selon un exemple de réalisation de l'invention, les pixels comprennent des électrodes conductrices et transparentes, les éléments de liaison étant reliés aux électrodes, la surface de contact entre les éléments de liaison et les électrodes étant strictement inférieure à la surface des électrodes en regard du substrat.

Selon un exemple de réalisation de l'invention, les électrodes sont en oxyde transparent et conducteur.

Selon un exemple de réalisation de l'invention, l'oxyde transparent et conducteur est l'oxyde d'indium dopé à l'étain ou l'oxyde de zinc dopé au gallium.

Selon un exemple de réalisation de l'invention, les éléments de liaison comprennent au moins une résine photosensible.

Selon un exemple de réalisation de l'invention, les éléments de liaison comprennent, en outre, au moins un élastomère.

Selon un exemple de réalisation de l'invention, les éléments de liaison sont électriquement conducteurs.

Selon un exemple de réalisation de l'invention, les pixels sont des capteurs de photons organiques.

Selon un exemple de réalisation de l'invention, le dispositif comprend, en outre, des éléments conducteurs sur le substrat s'étendant en partie entre les électrodes et le substrat, les électrodes n'étant pas au contact des éléments conducteurs lorsque le dispositif n'est pas déformé.

Selon un exemple de réalisation de l'invention, les éléments conducteurs sont métalliques ou en polymère conducteur.

La présente invention prévoit également un procédé de fabrication d'un dispositif d'interface tel que défini précédemment, comprenant les étapes suivantes :
(a) recouvrir le substrat isolant et transparent d'une couche de résine photosensible ;
(b) exposer la couche de résine photosensible à un rayonnement pour délimiter les éléments de liaison ;
(c) former les pixels sur la couche de résine photosensible ; et
(d) avant ou après l'étape (c), retirer partiellement la couche de résine photosensible pour former les éléments de liaison.

Selon un exemple de réalisation de l'invention, l'étape (c) comprend le recouvrement de la couche de résine photosensible d'une couche transparente et électriquement conductrice et la gravure de la couche transparente et électriquement conductrice pour former les électrodes.

Selon un exemple de réalisation de l'invention, la couche transparente et électriquement conductrice est en oxyde transparent et conducteur.

Selon un exemple de réalisation de l'invention, les pixels sont formés par les dépôts successifs de couches supplémentaires sur la couche transparente et électriquement conductrice et la gravure desdites couches supplémentaires.

Selon un exemple de réalisation de l'invention, les pixels sont formés par des techniques d'impression sur les électrodes.

Selon un exemple de réalisation de l'invention, le procédé comprend, en outre, la formation d'éléments conducteurs sur le substrat et le recouvrement du substrat et des éléments conducteurs avec la couche de résine photosensible.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une coupe partielle et schématique d'un exemple de dispositif d'interface utilisateur connu à électrodes transparentes ;
les figures 2 et 3 sont des coupes partielles et schématiques d'un exemple de réalisation du dispositif d'interface utilisateur selon l'invention ;
les figures 4 à 7 sont des coupes partielles et schématiques d'exemples de réalisation d'un élément de liaison du dispositif d'interface de la figure 2 ;
la figure 8 est une coupe partielle et schématique d'un autre exemple de réalisation du dispositif d'interface utilisateur ;
les figures 9 et 10 sont des coupes partielles et schématiques d'un autre exemple de réalisation du dispositif d'interface utilisateur ;
la figure 11 est une coupe analogue à la figure 9 et représente le dispositif d'interface utilisateur dans un état déformé ;
les figures 12A à 12G sont des coupes partielles et schématiques des structures obtenues à des étapes successives d'un exemple de réalisation de procédé de fabrication du dispositif d'interface utilisateur représenté à la figure 9 ; et
les figures 13A à 13G sont des coupes partielles et schématiques des structures obtenues à des étapes successives d'un autre exemple de réalisation d'un procédé de fabrication du dispositif d'interface utilisateur représenté à la figure 9.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de l'invention ont été représentés et seront décrits. En particulier, l'utilisation faite des dispositifs d'interface utilisateur décrits ci-après n'a pas été détaillée. L'homme de l'art saura utiliser les dispositifs proposés dans tout type de système susceptible d'être commandé via une interface tactile et/ou sans contact. De plus, les moyens de traitement des informations fournies par les dispositifs d'interface utilisateur décrits ci-après, et les moyens de liaison avec le ou les systèmes à commander, sont à la portée de l'homme de l'art et ne seront pas décrits.

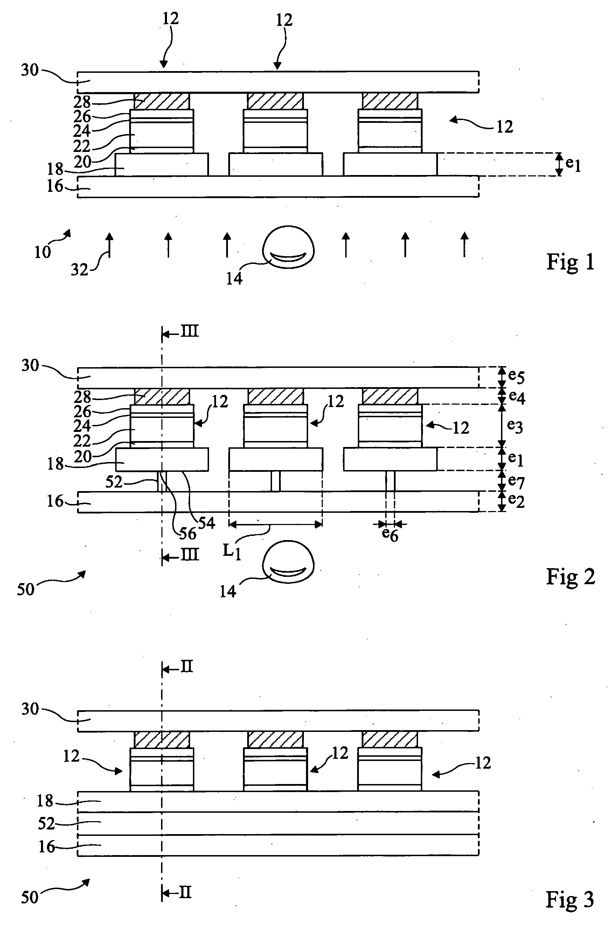

La figure 1 représente un exemple d'un dispositif d'interface utilisateur sans contact tel que décrit dans la demande de brevet français FR1158607.

Le dispositif 10 comprend une matrice de capteurs de photons, ou photodétecteurs 12, de préférence adaptée à détecter des variations de l'ombre ou de l'image d'un organe d'actionnement, par exemple un doigt 14. Les photodétecteurs 12 peuvent être disposés en rangées et en colonnes. Les photodétecteurs 12 sont formés sur un substrat 16 en un diélectrique transparent ou translucide, par exemple en verre ou en plastique.

Chaque photodétecteur 12 comprend un empilement comportant, dans l'ordre à partir du substrat 16 :
une électrode transparente 18 en un matériau TCO ;
une portion 20 injectrice d'électrons, par exemple en un polymère semiconducteur organique transparent très dopé ou en un oxyde métallique transparent et conducteur, par exemple de type ZnO ;
une portion 22 en un mélange de polymères semiconducteurs organiques, par exemple le poly(3-hexylthiophène) ou poly(3-hexylthiophène-2,5-diyl) (semiconducteur de type P), connu sous la dénomination P3HT, mélangé avec le [6,6]-phényl-C₆₁-butanoate de méthyle (semiconducteur de type N), connu sous la dénomination PCBM ;
une portion 24 en un polymère semiconducteur organique très dopé (couche injectrice de trous), par exemple un polymère connu sous la dénomination PEDOT:PSS, qui est un mélange de poly(3,4)-éthylènedioxythiophène et de polystyrène sulfonate de sodium ;
une couche 26 conductrice, par exemple une encre conductrice, comprenant notamment des particules métalliques noyées dans un polymère conducteur type encre argent ;
une électrode 28, par exemple en or ou en argent.

Un revêtement de protection 30 recouvre la face supérieure de la matrice (côté électrode 28).

Les portions 22 photoactives des photodétecteurs 12 sont ici destinées à être éclairées à travers le substrat 16 et à travers les électrodes 18 et les portions 20. Le rayonnement lumineux est schématiquement représenté par des flèches 32.

La matrice de photodétecteurs 12 peut être une matrice passive ou une matrice active. Pour une matrice passive, les électrodes transparentes 18 peuvent correspondre à des bandes rectilignes et parallèles, chaque bande pouvant être connectée à tous les photodétecteurs 12 d'une même rangée. Pour une matrice active, les électrodes transparentes 18 peuvent correspondre à une couche continue en contact avec tous les photodétecteurs 12 de la matrice. A titre de variante, les électrodes transparentes 18 peuvent être isolées les unes des autres, les photodétecteurs 12 étant dans ce cas indépendants les uns des autres.

Pour assurer une conduction satisfaisante des électrodes transparentes 18, l'épaisseur e₁ des électrodes 18 en matériau TCO est supérieure à 50 nm.

Les matériaux du type TCO utilisés pour réaliser les électrodes transparentes 18 sont des matériaux fragiles. Lorsqu'ils sont soumis à une trop forte contrainte, ces matériaux peuvent perdre leurs propriétés, notamment de conduction. En effet, au-delà d'une certaine contrainte, il y a apparition de fissures au niveau du matériau TCO, fissures ayant pour conséquence une diminution de la conductivité électrique des électrodes 18. Plusieurs techniques existent pour caractériser mécaniquement ces matériaux, notamment l'utilisation d'éprouvettes pour des tests en traction ou compression, afin de déterminer des valeurs physiques caractéristiques telles que le module de Young, le coefficient de Poisson ou encore l'allongement à la rupture. En ce qui concerne les matériaux TCO, l'allongement à la rupture est généralement faible, par exemple ne dépassant pas 10 %.

Les figures 2 et 3 représentent de façon schématique et partielle un exemple de réalisation d'un dispositif d'interface utilisateur 50 selon l'invention. La figure 3 est une coupe dans le plan III-III de la figure 2 et la figure 2 est une coupe dans le plan II-II de la figure 3.

Le dispositif d'interface utilisateur 50 comprend les éléments du dispositif d'interface utilisateur 10. Toutefois, à la différence du dispositif d'interface utilisateur 10 représenté en figure 1, le dispositif d'interface utilisateur 50 comprend des éléments de liaison 52 interposés entre les électrodes transparentes 18 et le substrat 16. Les électrodes 18 ne sont donc pas en contact direct avec le substrat 16 mais sont espacées du substrat 16 par les éléments de liaison 52. L'écart entre le substrat 16 et chaque électrode 18 est supérieur ou égal à 20 nm. La surface des électrodes 18 en vis-à-vis du substrat 16 est désignée par la référence 54. La surface 54 est de préférence plane. La surface de contact entre chaque élément de liaison 52 et l'électrode associée 18 est désignée par la référence 56. La surface de contact 56 de tous les éléments de liaison 52 est strictement inférieure à la surface 54 des électrodes 18 en regard du substrat 16. De façon avantageuse, la surface de contact 56 de tous les éléments de liaison 52 est inférieure à 50 %, de préférence 70 % de la surface 54 des électrodes 18 en regard du substrat 16. De préférence, la surface de contact 56 de tous les éléments de liaison 52 est supérieure à 10 % de la surface 54 des électrodes 18 en regard du substrat 16. A l'exception des éléments de liaison 52, les électrodes 18 sont séparées du substrat 16 par un gaz ou un mélange gazeux, par exemple par un gaz neutre, un mélange de gaz neutres ou par de l'air. Avantageusement, la surface de contact 56 est comprise entre 10 % et 50 % de la surface 54 des électrodes 18 en regard du substrat 16.

Les éléments de liaison 52 sont en un matériau plus souple que le matériau transparent et conducteur formant les électrodes 18. On entend par matériau souple, un matériau capable de se déformer élastiquement et, en particulier, un matériau dont l'allongement à la rupture est supérieur à 10 %, de préférence supérieur à 50 %, plus préférentiellement supérieur à 100 %, en particulier supérieur à 300 %.

Le matériau souple est, par exemple, une résine photosensible. Il peut s'agir d'une résine photosensible "positive". La partie de la résine exposée à un rayonnement spécifique devient alors soluble dans une solution aqueuse ou organique spécifique, appelée solution de développement, et la partie de la résine non exposée reste insoluble dans la solution de développement. Il peut s'agir d'une résine photosensible "négative". La partie de la résine exposée au rayonnement devient insoluble dans la solution de développement et la partie de la résine non exposée reste soluble dans la solution de développement. Le matériau souple peut correspondre à un mélange d'une résine et d'un élastomère. Un élastomère est un polymère ayant un allongement à la rupture élevé.

Des exemples de résine comprennent les composés suivantes :
phénolformaldéhyde, par exemple un mélange de diazonaphtoquinone (ou DNQ) et d'une résine novolaque (résine de phénolformaldéhyde) ;
polyhydroxystyrène ;
poly(méthyl méthacrylate) ou PMMA ;
poly(méthyl glutarimide) ou PMGI ; et
polymère à base époxy (par exemple résine commercialisée sous l'appellation SU-8 par la société Micochem).

Dans le présent exemple de réalisation, les électrodes 18 sont des bandes rectilignes. Les bandes rectilignes sont reliées à une extrémité à un circuit de traitement non représenté. Un élément de liaison 52 est associé à chaque électrode 18 et correspond à une bande rectiligne s'étendant entre l'électrode 18 et le substrat 16. A titre de variante, plusieurs éléments de liaison peuvent être disposés entre chaque électrode 18 et le substrat 16.

Les électrodes 18 sont en matériau TCO. Des exemples d'oxydes conducteurs et transparents sont :
oxyde d'indium dopé à l'étain ou ITO (acronyme anglais pour indium tin oxide) ;
oxyde d'étain ;
oxyde d'étain dopé au fluor ou FTO (acronyme anglais pour fluorine doped tin oxide) ;
oxyde de zinc ;
oxyde de zinc dopé à l'aluminium ou AZO (acronyme anglais pour aluminium doped zinc oxide) ; et
oxyde de cadmium dopé à l'indium.

Les dimensions du dispositif d'interface utilisateur 50 sont, à titre d'exemple, les suivantes :
épaisseur e₂ du substrat 16 : de 20 µm à 125 µm ;
épaisseur e₁ de chaque électrode 18 : de 50 nm à 500 nm, de préférence de 50 nm à 200 nm, plus préférentiellement de l'ordre de 125 nm ;
épaisseur e₃ de l'élément photodétecteur 12, c'est-à-dire épaisseur de l'empilement formé par les couches 20, 22, 24 et 26 : 500 nm ;
épaisseur e₄ de chaque électrode 28 : de 100 nm à 500 nm ; et
épaisseur e₅ du revêtement 30 : de 20 µm à 200 µm.

Chaque élément de liaison 52 a une épaisseur e₆, mesurée selon une direction perpendiculaire au plan de coupe de la figure 3, comprise entre 1 µm et 100 µm et une épaisseur e₇, mesurée selon la direction d'empilement du photodétecteur 12, comprise entre 20 nm et 5 µm.

Lorsque chaque électrode 18 correspond à une bande rectiligne, la largeur L₁ de chaque électrode 18 est par exemple de l'ordre de 10 µm à 1 mm.

Selon un exemple de réalisation, le dispositif 50 est adapté à détecter des variations de l'ombre portée d'un organe d'actionnement 14 sur la matrice de capteurs 12, lorsque l'organe d'actionnement est disposé entre une source lumineuse et la matrice, et à en déduire une information représentative d'une variation de position de l'organe d'actionnement. L'organe d'actionnement 14 peut être un doigt de l'utilisateur, sa main, ou tout autre objet. La source de lumière est de préférence la lumière ambiante, par exemple le soleil ou l'éclairage électrique intérieur d'une pièce d'un bâtiment.

Lorsque l'organe d'actionnement 14 est placé entre la source lumineuse et la matrice de capteurs, l'ombre portée de l'organe d'actionnement sur la matrice de capteurs entraîne une diminution de l'intensité lumineuse reçue par certains des capteurs 12. Ceci permet au dispositif 50 de détecter la présence de l'organe d'actionnement 14 à proximité de la matrice.

Selon un autre exemple de réalisation, le dispositif d'interface utilisateur 50 est adapté à utiliser l'image de l'organe d'actionnement 14, vue par les capteurs de photons 12, pour obtenir une information relative à la position de l'organe d'actionnement. On note qu'en pratique, l'ombre portée et l'image de l'organe d'actionnement 14 ne coïncident pas, sauf si la source de lumière est placée exactement dans l'axe de projection de l'organe d'actionnement sur la matrice de capteurs. En variante, le dispositif d'interface utilisateur 50 peut détecter à la fois l'ombre portée et l'image de l'organe d'actionnement 14 pour obtenir une information plus précise relative à la position ou aux variations de la position de l'organe d'actionnement.

On note que par position de l'organe d'actionnement 14, on entend ici une position relative par rapport au dispositif d'interface utilisateur 50. On peut notamment prévoir un mode d'utilisation dans lequel c'est le dispositif d'interface utilisateur 50 lui-même qui est déplacé, l'organe d'actionnement 14 restant fixe.

Bien que cela n'ait pas été représenté sur les figures, le dispositif 50 peut comprendre des moyens de traitement des signaux fournis par les photodétecteurs 12 (par exemple un microprocesseur), et des moyens de communication avec un appareil ou un système à commander (liaison filaire ou sans fil).

En outre, et bien que cela n'ait pas été représenté, chaque photodétecteur 12 peut comprendre une lentille de focalisation, par exemple une lentille de Fresnel. Une matrice de lentilles fait alors interface entre la région photosensible de la matrice de photodétecteurs 12 et le substrat 16, ou est intégrée au substrat 16. L'utilisation de lentilles permet d'améliorer la résolution latérale de détection de l'organe d'actionnement, notamment lorsque celui-ci est éloigné du dispositif d'interface utilisateur 50.

Lorsqu'une déformation est appliquée au dispositif d'interface utilisateur 50, le substrat 16 se déforme. Les éléments de liaison souples 52 jouent le rôle d'amortisseurs et réduisent la transmission des déformations aux électrodes transparentes 18. L'apparition de contraintes dans les électrodes 28 est donc réduite. Les éléments de liaison 52 sont des pilotis flexibles pouvant bouger pour absorber les contraintes mécaniques dues à la flexion du substrat 16 déformable. En outre, les éléments de liaison 52 permettent de diminuer les contraintes mécaniques présentes dans les pixels 12 par diminution de la surface de contact entre les éléments de liaison 52 et les électrodes 18.

La matrice des photodétecteurs 12 peut être une matrice "active". Chaque photodétecteur 12 peut alors être sélectionné individuellement. Dans ce but, on peut prévoir que, dans la matrice de photodétecteurs, un ou plusieurs transistors d'accès soient associés à chaque photodétecteur. Les transistors peuvent également être réalisés à partir de matériaux semiconducteurs organiques sous forme liquide ou en gel, par des techniques d'impression. Les transistors peuvent être prévus du côté du revêtement 30. La matrice des photodétecteurs 12 peut être une matrice "passive". Les électrodes transparentes 18 peuvent alors correspondre à des bandes rectilignes parallèles s'étendant selon les rangées de la matrice et les électrodes métalliques 28 peuvent correspondre à des bandes rectilignes s'étendant selon les colonnes de la matrice.

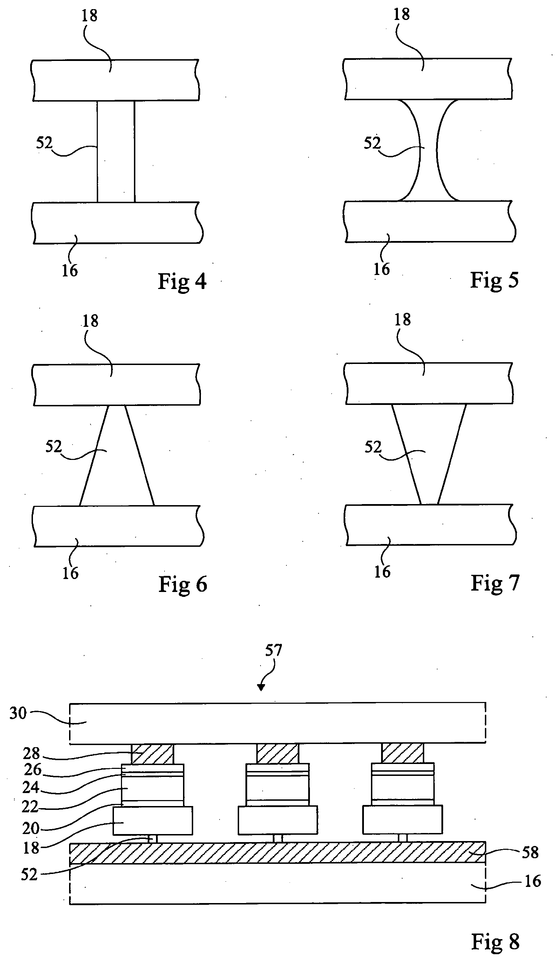

Les figures 4 à 7 sont des coupes illustrant plusieurs profils pour l'élément de liaison 52. En figure 4, l'élément de liaison 52 a un profil rectangulaire. En figure 5, l'élément de liaison 52 a un profil biconcave. En figure 6, l'élément de liaison 52 a un profil trapézoïdal dont la petite base est fixée à l'électrode 18 et dont la grande base est fixée au substrat 16. En figure 7, l'élément de liaison 52 a un profil trapézoïdal dont la petite base est fixée au substrat 16 et dont la grande base est fixée à l'électrode 18. Chaque profil peut avoir un avantage selon les couches et les techniques de fabrication utilisées. Le profil de la figure 4 est technologiquement le plus facile à réaliser et permet une bonne tenue sous contrainte. Le profil de la figure 5 a comme avantage principal d'avoir une surface de contact avec le substrat 16 et l'électrode 18 plus grande tout en gardant une section centrale réduite. Cela permet à la fois d'avoir une bonne adhésion avec le substrat 16 et l'électrode 18, mais également de garder des propriétés mécaniques intéressantes via la section centrale réduite. Les figures 6 et 7 exploitent également cet avantage en favorisant l'adhésion préférentiellement sur le substrat 16 (Figure 6) ou sur l'électrode 18 (Figure 7).

La figure 8 est une vue analogue à la figure 2 d'un autre exemple de réalisation du dispositif 57 d'interface utilisateur. Dans cet exemple de réalisation, le dispositif 57 comprend, en outre, des éléments conducteurs 58 disposés sur le substrat 16. Les éléments de liaison 52 relient les éléments conducteurs 58 aux électrodes 18. Les éléments conducteurs 58 peuvent correspondre à des bandes rectilignes. Les éléments conducteurs 58 peuvent être des éléments métalliques, par exemple en argent. L'épaisseur des éléments conducteurs 58 est comprise entre 10 nm et 500 nm. Les éléments conducteurs 58 peuvent ne pas être transparents.

Les éléments de liaison 52 ont les propriétés décrites précédemment et sont, en outre, conducteurs. Ils peuvent être réalisés en résine photosensible isolante avec ajout d'un élastomère conducteur (par exemple un élastomère en silicone chargé en particules conductrices). La proportion en élastomère conducteur varie de 1 % à 10 % en masse par rapport à la masse de l'élément de liaison 52.

L'allongement à la rupture de l'élastomère conducteur est compris entre 100 % et 300 %. Il peut s'agir de silicone chargé en particules métalliques. De préférence, le silicone est stable de -50°C à +125°C. Les particules métalliques peuvent être des particules de cuivre et d'argent, d'argent pur, de nickel et de graphite, d'aluminium et d'argent et/ou d'aluminium. L'élastomère peut comprendre de 1 % à 50 % en masse de particules métalliques par rapport à la masse de l'élastomère. Les particules métalliques ont, par exemple, un diamètre moyen qui varie de quelques manomètres à plusieurs micromètres. La résistivité électrique de l'élastomère est, par exemple, inférieure à 0,007 Ω.cm. Un tel élastomère peut correspondre à l'élastomère commercialisé par la société GETELEC sous l'appellation GT 2000.

Les photodétecteurs 12 sont donc continuellement connectés électriquement aux éléments conducteurs 58 quel que soit l'état de contrainte du substrat 16.

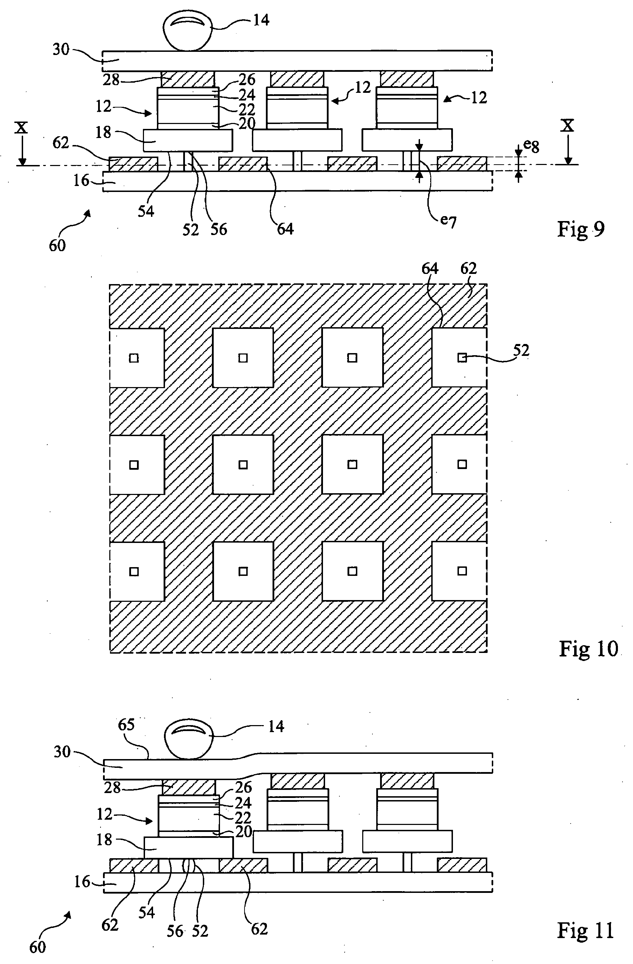

La figure 9 est une vue analogue à la figure 2 d'un autre exemple de réalisation du dispositif 60 d'interface utilisateur. Dans cet exemple de réalisation, le dispositif 60 comprend, en outre, des éléments conducteurs 62 disposés sur le substrat 16, du côté des éléments de liaison 52 et s'étendant en partie sous les électrodes transparentes 18. Les éléments conducteurs 62 délimitent des ouvertures 64 pour permettre le passage du rayonnement lumineux vers les capteurs 12. Les éléments conducteurs 62 peuvent être des éléments métalliques, par exemple en argent. L'épaisseur e₈ des éléments conducteurs 62 est inférieure à l'épaisseur e₇ des éléments de liaison 52. L'épaisseur e₈ des éléments conducteurs 62 est comprise entre 10 nm et 500 nm. Les éléments conducteurs 62 peuvent ne pas être transparents.

Les éléments conducteurs 62 peuvent correspondre à des bandes rectilignes. A titre d'exemple, lorsque les électrodes transparentes 18 correspondent à des bandes rectilignes parallèles, les éléments conducteurs 62 peuvent correspondre à des bandes rectilignes parallèles aux électrodes 18.

La figure 10 représente une coupe de la figure 9 selon la ligne X-X et représente un exemple de réalisation des éléments conducteurs 62 et des éléments de liaison 52. Dans cet exemple de réalisation, les éléments de liaison 52 ont la forme de plots, par exemple de section carrée ou rectangulaire, et les éléments conducteurs 62 sont connectés les uns aux autres et délimitent les ouvertures 64 autour de chaque élément de liaison 52. Les ouvertures 64 peuvent être de section carrée, rectangulaire, circulaire, elliptique, etc. Chaque ouverture 64 est sensiblement dans le prolongement d'un empilement photodétecteur 12 pour permettre le passage des rayons lumineux.

La figure 11 représente le dispositif 60 lorsqu'une pression est exercée sur le revêtement 30, par exemple par l'organe d'actionnement 14. Dans le présent exemple de réalisation, les éléments conducteurs 62 sont reliés à un circuit de traitement non représenté. Lorsque le dispositif d'interface utilisateur 60 n'est pas déformé, les électrodes transparentes 60 ne sont pas en contact avec les éléments conducteurs 62. Le dispositif d'interface utilisateur 60 ne fonctionne pas. Lorsqu'une pression est exercée sur le dispositif 60, une zone 65 de déformation du revêtement 30 apparaît sous l'action de l'organe d'actionnement 14. Ceci entraîne une déformation des éléments de liaison 52 reliés aux photodétecteurs 12 dans la zone de déformation 65. Ces photodétecteurs 12 se déplacent jusqu'à venir au contact des éléments conducteurs 62 adjacents. Seuls les signaux stockés dans les photodétecteurs 12 ainsi connectés aux éléments conducteurs 62 peuvent être mesurés par le circuit de traitement. Le dispositif 60 peut être utilisé simultanément comme un écran de détection sans contact et un écran tactile. A titre de variante, la déformation peut être appliquée du côté du substrat 16. En figure 11, on a représenté un photodétecteur 12 dans la zone de déformation 65 au contact des deux éléments conducteurs 62 adjacents interposés entre l'électrode 18 et le substrat 16. A titre de variante, suivant la localisation de la zone de déformation 65, la déformation des éléments de liaison 52 peut entraîner une inclinaison des photodétecteurs 12 jusqu'à venir en contact avec un seul des éléments conducteurs 62 de la paire d'éléments conducteurs 62 interposés entre l'électrode 18 et le substrat 16.

Un exemple d'application est par exemple d'assurer que le dispositif d'interface utilisateur sans contact 60 fonctionne seulement lorsqu'il est déformé convenablement. A titre d'exemple, le dispositif d'interface utilisateur 60 est initialement dans une configuration plane dans laquelle les photodétecteurs 12 ne sont pas connectés aux éléments conducteurs 62. Le dispositif d'interface utilisateur 60 sans contact ne fonctionne alors pas. Selon l'application visée, le dispositif d'interface utilisateur est appliqué sur la surface d'un support qui n'est pas plane. Ceci entraîne une déformation du dispositif d'interface utilisateur 60 et la mise en contact des électrodes transparentes 18 avec les éléments conducteurs 62. Le dispositif d'interface utilisateur 60 peut alors être utilisé comme un écran sans contact. Le dispositif d'interface utilisateur est donc au repos lorsque le substrat n'est pas soumis à une déformation mécanique et est fonctionnel lorsque le substrat est soumis à une déformation mécanique.

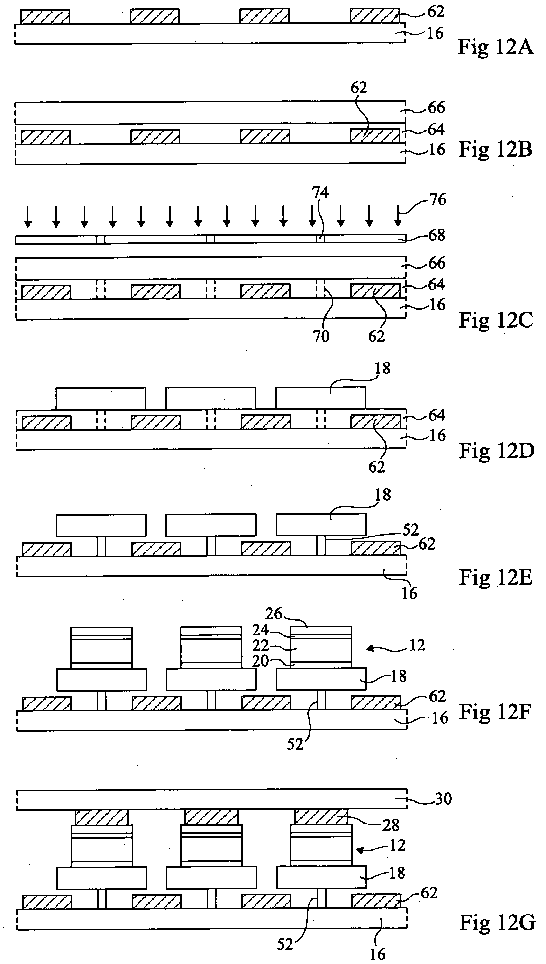

Les figures 12A à 12G illustrent les structures obtenues à des étapes successives d'un exemple de réalisation d'un procédé de fabrication du dispositif d'interface utilisateur 60 représenté en figure 9.

La figure 12A représente la structure obtenue après une étape de formation des éléments conducteurs 62 sur le substrat 16. A titre d'exemple, les éléments conducteurs 62 sont formés sur le substrat 16 par un procédé de dépôt par évaporation.

La figure 12B représente la structure obtenue après avoir recouvert la structure de la figure 12A d'une couche de résine 64, de façon à recouvrir complètement les éléments conducteurs 62, puis après avoir déposé, sur la couche de résine 64, une couche 66 de matériau TCO, par exemple de l'ITO. Dans le présent exemple de réalisation, la résine photosensible est une résine négative. La couche de résine 64 peut être déposée par un procédé de dépôt à la tournette (en anglais spin coating). La couche de matériau TCO 66 peut être déposée par pulvérisation cathodique.

La figure 12C représente la structure obtenue après une étape d'exposition de la couche de résine 64 à un rayonnement à travers un masque 68, ou étape d'insolation, de façon à former des motifs 70 dans la couche de résine 64. Les motifs 70 sont représentés par des traits en pointillés sur les différentes figures. Le masque 68 comprend des ouvertures 74 reproduisant un motif à transférer à la couche de résine 64. Le rayonnement utilisé pour l'exposition de la couche de résine 64 est représenté par des flèches 76.

A titre de variante, l'étape de dépôt de la couche du matériau TCO 66 peut être réalisée après l'étape d'exposition de la couche de résine 64.

La figure 12D représente la structure obtenue après une étape de gravure de la couche d'ITO 66 pour délimiter les électrodes transparentes 18. La gravure de la couche d'ITO 66 peut être une gravure laser.

La figure 12E représente la structure obtenue après le retrait partiel de la couche de résine 64 pour délimiter les éléments de liaison 52. Le retrait de la couche de résine 64 peut être réalisé par dissolution des parties de la résine non insolées dans une solution aqueuse ou organique adaptée.

La figure 12F représente la structure obtenue après la formation des photodétecteurs 12. Les empilements formant les photodétecteurs 12 peuvent être réalisés par des procédés d'impression. Les matériaux des portions 20 à 26 susmentionnées sont déposés sous forme liquide, par exemple sous forme d'encres conductrices et semiconductrices à l'aide d'imprimantes à jet d'encre. On notera que par matériaux sous forme liquide, on entend ici également des matériaux en gel déposables par des techniques d'impression. Des étapes de recuit sont éventuellement prévues entre les dépôts des différentes couches, mais les températures de recuit peuvent ne pas dépasser 150°C, et le dépôt et les éventuels recuits peuvent être réalisés à la pression atmosphérique. La réalisation de composants semiconducteurs organiques par des techniques d'impression est par exemple décrite dans l'article "CEA-LITEN S2S Printing Platform for Organic CMOS and Sensors Devices" de Jean-Yves Laurent et al, conférence LOPE-C, juin 2011, Francfort.

La figure 12G représente la structure obtenue après le recouvrement de la structure représentée en figure 12F par le revêtement 30 muni des électrodes métalliques 28. La fixation des électrodes métalliques 28 aux portions 26 des photodétecteurs 12 peut être réalisée par lamination avec, par exemple, utilisation de colles conductrices.

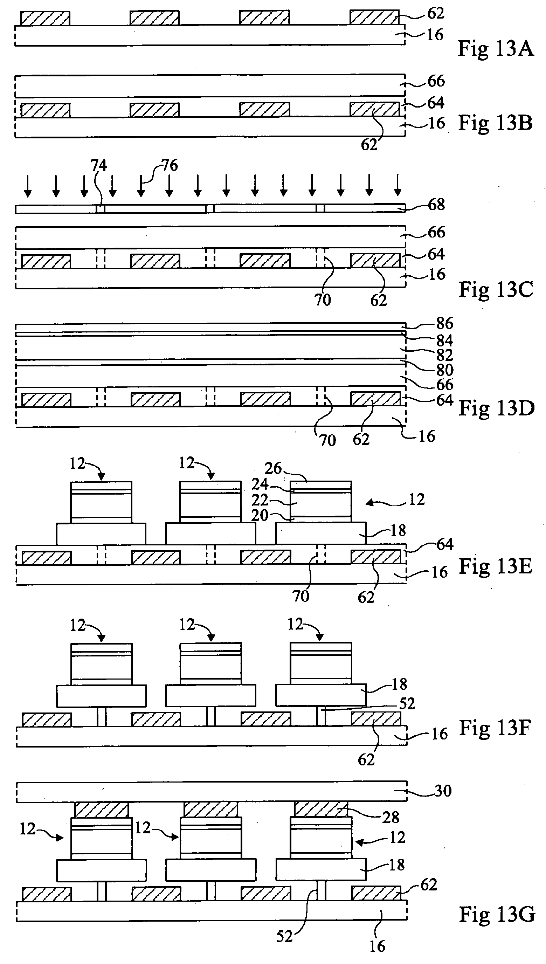

Les figures 13A à 13G représentent les structures obtenues à des étapes successives d'un autre exemple de réalisation de procédé de fabrication du dispositif d'interface utilisateur 60 représenté en figure 9.

Les figures 13A à 13C sont identiques respectivement aux figures 12A à 12C décrites précédemment.

La figure 13D représente la structure obtenue après avoir déposé sur la couche 66 successivement des couches 80, 82, 84 et 86. La couche 80 est par exemple une couche d'oxyde de zinc (couche donneuse d'électrons). La couche 82 est en un polymère semiconducteur organique. La couche 84 est en un polymère semiconducteur organique très dopé (couche donneuse de trous). La couche 86 est en un matériau conducteur, par exemple en carbone. Les couches 80, 82, 84 et 86 peuvent être déposées par sérigraphie, impression à jet d'encre ou dépôt à la tournette.

La figure 13E représente la structure obtenue après la gravure des couches 86, 84, 82, 80 et 66 pour délimiter successivement les portions 26, 24, 22 et 20 de chaque photodétecteur 12 et pour délimiter les électrodes transparentes 18. Il peut s'agir d'une gravure laser. De préférence, chaque couche 86, 84, 82, 80 et 66 est gravée successivement. En effet, les conditions de gravure laser peuvent être spécifiques pour chaque couche 86, 84, 82, 80 et 66.

La figure 13F représente la structure obtenue après le retrait partiel de la couche de résine 64 pour délimiter les éléments de liaison 52. Le retrait de la couche de résine peut être réalisé par dissolution des parties de la résine non insolées dans une solution aqueuse ou organique adaptée.

La figure 13G est identique à la figure 12G décrite précédemment.

Des modes de réalisation particuliers de la présente invention ont été décrits. Diverses variantes et modifications apparaîtront à l'homme de l'art. En particulier, bien que la présente invention ait été décrite pour un dispositif d'interface utilisateur dans lequel les éléments de liaison 52 sont situés entre les électrodes 18 et le substrat 16 ou entre les électrodes 18 et les éléments conducteurs 58, les éléments de liaison 52 peuvent être disposés entre les électrodes 28 et le revêtement 30. De plus, des éléments de liaison 52 peuvent être prévus à la fois entre les électrodes 18 et le substrat 16 (ou les éléments conducteurs 58) et entre les électrodes 28 et le revêtement 30. Ce dernier cas permet avantageusement de répartir les contraintes à la fois sur le haut et sur le bas de chaque photodétecteur 12 et donc d'éviter encore davantage l'apparition de contraintes trop importantes.

En outre, bien que la présente invention ait été décrite pour un dispositif d'interface utilisateur comprenant une matrice de photodétecteurs, la présente invention peut s'appliquer à un écran d'affichage comprenant une matrice d'éléments, émetteurs de photons ou modifiant le passage de photons, connectés à des électrodes transparentes en TCO recouvertes d'un substrat transparent.

Divers modes de réalisation avec diverses variantes ont été décrits ci-dessus. On note que l'homme de l'art pourra combiner divers éléments de ces divers modes de réalisation et variantes sans faire preuve d'activité inventive. A titre d'exemple, les profils des éléments de liaison 52 représentés aux figures 5 à 7 peuvent être mis en oeuvre avec les exemples de réalisation du dispositif d'interface utilisateur représentés aux figures 8 et 9.

## Revendications

1. Dispositif d'interface (50 ; 60) comprenant une matrice de pixels (12) et un substrat (16) isolant et transparent, les pixels étant reliés au substrat par des éléments de liaison (52), la surface de contact entre les éléments de liaison et les pixels étant strictement inférieure à la surface des pixels en regard du substrat.

2. Dispositif d'interface selon la revendication 1, dans lequel la surface de contact entre les éléments de liaison (52) et les pixels (12) est inférieure à la moitié de la surface des électrodes en regard du substrat (16).

3. Dispositif d'interface selon la revendication 1 ou 2, dans lequel les éléments de liaison (52) sont en un matériau plus souple que les matériaux constituant les pixels (12).

4. Dispositif d'interface selon l'une quelconque des revendications 1 à 3, dans lequel les éléments de liaison sont en un matériau souple ayant un allongement à la rupture supérieur ou égal à 10 %.

5. Dispositif d'interface selon l'une quelconque des revendications 1 à 4, dans lequel les pixels comprennent des électrodes (18) conductrices et transparentes, les éléments de liaison (52) étant reliés aux électrodes, la surface de contact entre les éléments de liaison et les électrodes étant strictement inférieure à la surface des électrodes en regard du substrat (16).

6. Dispositif d'interface selon la revendication 5, dans lequel les électrodes (18) sont en oxyde transparent et conducteur.

7. Dispositif d'interface selon la revendication 6, dans lequel l'oxyde transparent et conducteur est l'oxyde d'indium dopé à l'étain ou l'oxyde de zinc dopé au gallium.

8. Dispositif d'interface selon l'une quelconque des revendications 1 à 7, dans lequel les éléments de liaison (52) comprennent au moins une résine photosensible.

9. Dispositif d'interface selon la revendication 8, dans lequel les éléments de liaison (52) comprennent, en outre, au moins un élastomère.

10. Dispositif d'interface selon l'une quelconque des revendications 1 à 9, dans lequel les éléments de liaison (52) sont électriquement conducteurs.

11. Dispositif d'interface selon l'une quelconque des revendications 1 à 10, dans lequel les pixels (12) sont des capteurs de photons organiques.

12. Dispositif d'interface selon l'une quelconque des revendications 1 à 11, comprenant, en outre, des éléments conducteurs (62) sur le substrat (16) s'étendant en partie entre les électrodes (18) et le substrat (16), les électrodes n'étant pas au contact des éléments conducteurs lorsque le dispositif n'est pas déformé.

13. Dispositif d'interface selon la revendication 12, dans lequel les éléments conducteurs (62) sont métalliques ou en polymère conducteur.

14. Procédé de fabrication d'un dispositif d'interface (50 ; 60) selon l'une quelconque des revendications 1 à 13, comprenant les étapes suivantes :
(a) recouvrir le substrat (16) isolant et transparent d'une couche de résine photosensible (64) ;
(b) exposer la couche de résine photosensible à un rayonnement pour délimiter les éléments de liaison (52) ;
(c) former les pixels (12) sur la couche de résine photosensible ; et
(d) avant ou après l'étape (c), retirer partiellement la couche de résine photosensible (64) pour former les éléments de liaison.

15. Procédé selon la revendication 14, dans lequel l'étape (c) comprend le recouvrement de la couche de résine photosensible (64) d'une couche transparente et électriquement conductrice (66) et la gravure de la couche transparente et électriquement conductrice pour former les électrodes (18).

16. Procédé selon la revendication 15, dans lequel la couche transparente et électriquement conductrice (66) est en oxyde transparent et conducteur.

17. Procédé selon la revendication 15 ou 16, dans lequel les pixels (12) sont formés par les dépôts successifs de couches supplémentaires (80, 82, 84, 86) sur la couche transparente et électriquement conductrice (66) et la gravure desdites couches supplémentaires.

18. Procédé selon l'une quelconque des revendications 15 à 17, dans lequel les pixels (12) sont formés par des techniques d'impression sur les électrodes (18).

19. Procédé selon l'une quelconque des revendications 14 à 18, comprenant, en outre, la formation d'éléments conducteurs (62) sur le substrat (16) et le recouvrement du substrat et des éléments conducteurs avec la couche de résine photosensible (64).

## Patentansprüche

1. Eine Schnittstellenvorrichtung (50; 60), die eine Pixelanordnung (12) und ein transparentes Isolationssubstrat (16) aufweist, wobei die Pixel mit dem Substrat durch Verbindungselemente (52) verbunden sind, und wobei das Kontaktoberflächengebiet zwischen den Verbindungselementen und den Pixeln kleiner ist als das Oberflächengebiet der Pixel entgegengesetzt zum Substrat.

2. Eine Schnittstellenvorrichtung nach Anspruch 1, wobei das Kontaktoberflächengebiet zwischen den Verbindungselementen (52) und den Pixeln (12) kleiner ist als die Hälfte des Oberflächengebiets der Elektroden entgegengesetzt zum Substrat (16).

3. Die Schnittstellenvorrichtung nach Anspruch 1 oder 2, wobei die Verbindungselemente (52) aus einem Material hergestellt sind, das flexibler ist als die die Pixel (12) formenden Materialien.

4. Die Schnittstellenvorrichtung nach den Ansprüchen 1 bis 3, wobei die Verbindungselemente aus einem flexiblen Material mit einer Bruchdehnung größer als oder gleich 10 % hergestellt sind.

5. Die Schnittstellenvorrichtung nach einem der Ansprüche 1 bis 4, wobei die Pixel transparente leitende Elektroden (18) aufweisen, die Verbindungselemente (52) mit den Elektroden verbunden sind und das Kontaktoberflächengebiet zwischen den Verbindungselementen und den Elektroden kleiner ist als das Oberflächengebiet der Elektroden entgegengesetzt zum Substrat (16).

6. Die Schnittstellenvorrichtung nach Anspruch 5, wobei die Elektroden (18) aus einem transparenten leitenden Oxyd hergestellt sind.

7. Die Schnittstellenvorrichtung nach Anspruch 6, wobei das transparente leitende Oxyd Indiumzinnoxyd oder Galliumzinkoxyd ist.

8. Die Schnittstellenvorrichtung nach einem der Ansprüche 1 bis 7, wobei die Verbindungselemente (52) mindestens einen Fotolack (photo resist) aufweisen.

9. Die Schnittstellenvorrichtung nach Anspruch 8, wobei die Verbindungselemente (52) ferner mindestens ein Elastomer aufweisen.

10. Die Schnittstellenvorrichtung nach einem der Ansprüche 1 bis 9, wobei die Verbindungselemente (52) elektrisch leitend sind.

11. Die Schnittstellenvorrichtung nach einem der Ansprüche 1 bis 10, wobei die Pixel (12) organische Photonensensoren sind.

12. Die Schnittstellenvorrichtung nach einem der Ansprüche 1 bis 11, wobei ferner leitende Elemente (62) auf dem Substrat (16) sich zwischen den Elektroden (18) und dem Substrat (16) teilweise erstrecken, wo die Elektroden nicht in Kontakt mit den leitenden Elementen sind, wenn die Vorrichtung nicht deformiert ist.

13. Die Schnittstellenvorrichtung nach Anspruch 12, wobei die leitenden Elemente (62) aus Metall sind oder aus einem leitendem Polymer.

14. Ein Verfahren zu Herstellung der Schnittstellenvorrichtung (50; 60) nach irgendeinem der Ansprüche 1 bis 13, wobei folgende Schritte vorgesehen sind:
(a) Abdecken des transparenten isolierenden Substrats (16) mit einer Photolack- bzw. Photoresistschicht (64);
(b) Aussetzen der Resistschicht gegenüber einer Strahlung zur Definition der Verbindungselemente (52);
(c) Formen der Pixel (12) auf der Photoresistschicht; und
(d) teilweises Entfernen der Resistschicht (64) der Verbindung vor- oder nach dem Schritt (c) zur Bildung der Verbindungselemente.

15. Das Verfahren nach Anspruch 14, wobei der Schritt (c) das Abdecken der Photoresistschicht (64) mit einer elektrisch leitenden transparenten Schicht (66) und das Ätzen der elektrisch leitenden transparenten Schicht zur Bildung der Elektroden (18) aufweist.

16. Das Verfahren nach Anspruch 15, wobei die elektrisch leitende transparente Schicht (66) aus transparentem leitenden Oxyd hergestellt ist.

17. Das Verfahren nach Anspruch 15 oder 16, wobei die Pixel (12) durch aufeinanderfolgende Abscheidung von zusätzlichen Schichten (80, 82, 84, 86) auf der elektrisch leitenden transparenten Schicht (66) und Ätzen der zusätzlichen Schichten geformt werden.

18. Das Verfahren nach einem der Ansprüche 15 bis 17, wobei die Pixel (12) durch Druckverfahren auf den Elektroden (18) geformt werden.

19. Das Verfahren nach einem der Ansprüche 14 bis 18, wobei ferner folgendes vorgesehen ist:
Formen leitender Elemente (62) auf dem Substrat (16) und Abdecken des Substrats und der leitenden Elemente mit der Resistschicht (64).

## Claims

1. An interface device (50; 60) comprising a pixel array (12) and a transparent insulating substrate (16), the pixels being connected to the substrate by connection elements (52), the contact surface area between the connection elements and the pixels being smaller than the surface area of the pixels opposite the substrate.

2. The interface device of claim 1, wherein the contact surface area between the connection elements (52) and the pixels (12) is smaller than half the surface area of the electrodes opposite the substrate (16).

3. The interface device of claim 1 or 2, wherein the connection elements (52) are made of a material more flexible than the materials forming the pixels (12).

4. The interface device of any of claims 1 to 3, wherein the connection elements are made of a flexible material having an elongation at break greater than or equal to 10%.

5. The interface device of any of claims 1 to 4, wherein the pixels comprise transparent conductive electrodes (18), the connection elements (52) being connected to the electrodes, the contact surface area between the connection elements and the electrodes being smaller than the surface area of the electrodes opposite the substrate (16).

6. The interface device of claim 5, wherein the electrodes (18) are made of transparent conductive oxide.

7. The interface device of claim 6, wherein the transparent conductive oxide is indium tin oxide or gallium zinc oxide.

8. The interface device of any of claims 1 to 7, wherein the connection elements (52) comprise at least a photoresist.

9. The interface device of claim 8, wherein the connection elements (52) further comprise at least an elastomer.

10. The interface device of any of claims 1 to 9, wherein the connection elements (52) are electrically conductive.

11. The interface device of any of claims 1 to 10, wherein the pixels (12) are organic photon sensors.

12. The interface device of any of claims 1 to 11, further comprising conductive elements (62) on the substrate (16) partly extending between the electrodes (18) and the substrate (16), where the electrodes are not in contact with the conductive elements when the device is not deformed.

13. The interface device of claim 12, wherein the conductive elements (62) are metallic or made of conductive polymer.

14. A method of manufacturing the interface device (50; 60) of any of claims 1 to 13, comprising the steps of:
(a) covering the transparent insulating substrate (16) with a photoresist layer (64);
(b) exposing the resist layer to a radiation to define the connection elements (52);
(c) forming the pixels (12) on the photoresist layer; and
(d) before or after step (c), partially removing the resist layer (64) to form the connection elements.

15. The method of claim 14, wherein step (c) comprises covering the photoresist layer (64) with an electrically-conductive transparent layer (66) and etching the electrically-conductive transparent layer to form the electrodes (18).

16. The method of claim 15, wherein the electrically-conductive transparent layer (66) is made of transparent conductive oxide.

17. The method of claim 15 or 16, wherein the pixels (12) are formed by successive deposition of additional layers (80, 82, 84, 86) on the electrically-conductive transparent layer (66) and etching said additional layers.

18. The method of any of claims 15 to 17, wherein the pixels (12) are formed by printing techniques on electrodes (18).

19. The method of any of claims 14 to 18, further comprising forming conductive elements (62) on the substrate (16) and covering the substrate and the conductive elements with the resist layer (64).
